# EUROPEAN PATENT SPECIFICATION

(11) **EP 3 448 007 B1**
(45) Date of publication and mention of the grant of the patent: **31.03.2021**
(21) Application number: 17785603.6
(22) Date of filing: 07.02.2017
(51) Int. Cl.: H04M 15/00, H04M 11/00, H04W 4/24

(54) **INFORMATION PROCESSING DEVICE, INFORMATION PROCESSING SYSTEM, INFORMATION PROCESSING METHOD AND PROGRAM**
INFORMATIONSVERARBEITUNGSVORRICHTUNG, INFORMATIONSVERARBEITUNGSSYSTEM, INFORMATIONSVERARBEITUNGSVERFAHREN UND PROGRAMM
DISPOSITIF DE TRAITEMENT D'INFORMATION, SYSTÈME DE TRAITEMENT D'INFORMATION, PROCÉDÉ ET PROGRAMME DE TRAITEMENT D'INFORMATION

(30) Priority: 21.04.2016 JP 2016085526
(43) Date of publication of application: 27.02.2019
(73) Proprietor: Sony Corporation, Tokyo 108-0075 (JP)
(72) Inventor: TAKANO, Hiroaki, Tokyo 108-0075 (JP)
(74) Representative: Witte, Weller & Partner Patentanwälte mbB
(86) International application number: PCT/JP2017/004411
(87) International publication number: WO 2017/183258

(56) References cited:
- EP-A1- 2 779 541
- WO-A1-2015/104525
- WO-A2-2011/100518
- WO-A2-2012/139016
- JP-A- 2003 143 190
- JP-A- 2015 092 748
- JP-A- 2015 530 794
- JP-A- 2016 506 145

## Description

### Technical Field

The present technology relates to an information processing device, an information processing system, an information processing method and a program. More specifically, the present technology relates to an information processing device configured to send/receive information using wireless communication, an information processing system, and a processing method for the device and the system and a program that causes a computer to execute the processing method.

### Background Art

A system in which a wireless access network and another network such as the Internet are connected to each other is conventionally used. One example of such a system is Long Term Evolution (LTE). In LTE, a wireless access network and another network are connected to each other via Evolved Packet Core (EPC), which is a core network. Further, all data is converted into packets that are based on an internet protocol (IP) and transferred. In such a system, a user who uses a wireless terminal can use an application provided by the Internet.

As a technology for improving usability when an application on the other network is used from the wireless access network in such a system, there has been proposed mobile edge computing (MEC). In MEC, a cache server that holds data associated with the application is provided within the wireless access network. Accessing the data held in this cache server can shorten time when transferring data to the wireless terminal and improve usability.

One proposed technology for the cache server is a system in which a local cache is provided to a wireless access network, and a fee is charged when a user uses data held in the local cache (see, for example, Patent Literature 1). In this system, a fee is charged when data such as content is provided from the network to the local cache.

WO 2011/100518 A2 discloses a method and system for accounting for content served from a RAN cache, thereby allowing for mobile communication providers to charge users for the content they access.

WO 2012/139016 A2 discloses methods and apparatus for local data caching where data may be stored in a local data storage connected to a base station or network nodes.

EP 2 779 541 A1 discloses a method and an apparatus for controlling charging by using volume information of data.

WO 2015/104525 A1 discloses a mobile telecommunications network including a core network having content processing means operable to provide a core network service relating to content, and a radio access network having radio means for wireless communication with terminals registered with the network.

### Citation List

### Patent Literature

Patent Literature 1: JP 2015-92748A

### Disclosure of Invention

### Technical Problem

In the above-described conventional technology, a fee is charged when data is held in the local cache, but a fee is not charged when a user uses the data held in the local cache thereafter. Because of this, there is a problem in that a fee cannot be correctly charged in a case where, for example, the data held in the local cache of the wireless access network is used a plurality of times, and the like.

The present technology has been developed in light of such a problem and has an object to charge a fee according to a usage amount of data held in a cache server provided in a wireless access network.

### Solution to Problem

The present technology has been devised to solve the above-described problem, and a first aspect thereof is an information processing device according to claim 1.

In addition, a second aspect of the present technology is an information processing system according to claim 2.

In addition, according to a third aspect of the present technology, an information processing method according to claim 7 is presented.

In addition, according to a fourth aspect and as defined in claim 8, a program for causing a computer to execute the information processing method according to claim 7 is presented.

### Advantageous Effects of Invention

The present technology can provide a superior effect of being able to correctly charge a fee relating to the use of data held in a cache server provided in a wireless access network. Note that the effects described herein are not necessarily limitative and may refer to any one of the effects described in this specification.

### Brief Description of Drawings

[FIG. 1] FIG. 1 is an illustration of an exemplary configuration of an information processing system 10 according to a first embodiment of the present technology.
[FIG. 2] FIG. 2 is an illustration of an exemplary configuration of an area for charging a fee according to the first embodiment of the present technology.
[FIG. 3] FIG. 3 is an illustration of an exemplary configuration of a first fee charging device 260 according to the first embodiment of the present technology.
[FIG. 4] FIG. 4 is an illustration of an exemplary processing procedure for fee charging processing according to the first embodiment of the present technology.
[FIG. 5] FIG. 5 is an illustration of an exemplary processing procedure for processing of setting fee charging information (Step S910) according to the first embodiment of the present technology.
[FIG. 6] FIG. 6 is an illustration of an exemplary configuration of an area for charging a fee according to a second embodiment of the present technology.
[FIG. 7] FIG. 7 is an illustration of an exemplary configuration of an area for charging a fee according to a third embodiment of the present technology.
[FIG. 8] FIG. 8 is an illustration of an exemplary configuration of a wireless access network 300 according to a fourth embodiment of the present technology.
[FIG. 9] FIG. 9 is an illustration of an exemplary handover sequence according to the fourth embodiment of the present technology.
[FIG. 10] FIG. 10 is an illustration of an exemplary configuration of an information processing system 10 according to a fifth embodiment of the present technology.
[FIG. 11] FIG. 11 is an illustration of an exemplary configuration of an area for charging a fee according to the fifth embodiment of the present technology.
[FIG. 12] FIG. 12 is an illustration of an exemplary configuration of a first fee charging device 260 according to a modification example of an embodiment of the present technology.

Modes (hereinafter referred to as "embodiments") for carrying out the present technology are described below. Description is given in the following order:
1. First embodiment (example of a case where a second fee charging unit for measuring a usage amount of data held in an application server is used)
2. Second embodiment (example of a case where a plurality of second fee charging devices is used)
3. Third embodiment (example of a case where a measurement result of the second fee charging device is sent to a first fee charging device)
4. Fourth embodiment (example of a case where fee charging information is transferred during handover)
5. Fifth embodiment (example of a case including a dedicated gateway for the application server)
6. Modification example

### <1. First embodiment>

### [Configuration of information processing system]

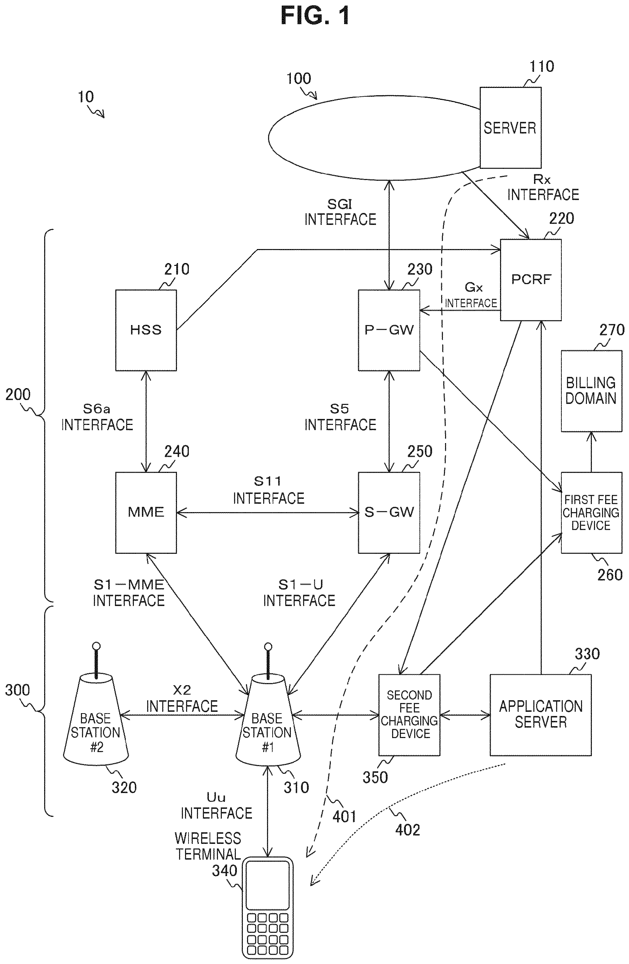

FIG. 1 is an illustration of an exemplary configuration of an information processing system 10 according to a first embodiment of the present technology. The information processing system 10 includes a network 100, a core network 200 and a wireless access network 300.

The network 100 is a network that sends/receives packets that are based on an IP such as the Internet. The network 100 includes a server 110 that holds an application. This application corresponds to, for example, an application that broadcasts data of images and the like, for instance.

### [Configuration of core network]

In FIG. 1, the core network 200 is a network that connects the network 100 to the wireless access network 300. EPC, for example, can be used as the core network 200. The core network 200 includes a home subscriber server (HSS) 210, a mobility management entity (MME) 240, a packet data network gateway (P-GW) 230, a serving gateway (S-GW) 250, a policy and charging rule function (PCRF) 220, a first fee charging device 260 and a billing domain 270.

The HSS 210 and the MME 240 are connected to each other via an S6a interface. The MME 240 and the S-GW 250 are connected to each other via an S11 interface. The S-GW 250 and the P-GW 230 are connected to each other via an S5 interface. The P-GW 250 and the PCRF 220 are connected to each other via a Gx interface. In addition, the P-GW 230 and the network 100 are connected to each other via an SGI interface. The PCRF 220 and the network 100 are connected to each other via an Rx interface.

The HSS 210 holds subscriber information.

The MME 240 performs processing such as authentication management of a wireless terminal 340 that is connected to the wireless access network 300 and position management of the wireless terminal 340. The MME 240 performs processing on the basis of the subscriber information in the HSS 210.

The S-GW 250 performs relay processing of packets on the basis of the subscriber information.

The P-GW 230 connects the core network 200 and the network 100 to each other and controls packets. The P-GW 230 measures a network data usage amount that is a usage amount when a user of the wireless terminal 340 uses data of the network 100, for example, data of the server 110 via the wireless access network 300. As described later, the network data usage amount is measured on the basis of network data fee charging information supplied by the PCRF 220. Note that the P-GW 230 is an example of a network data usage amount measuring unit in the Claims.

The PCRF 220 generates the network data fee charging information and data fee charging information and supplies this information to the P-GW 230 and a second fee charging device 350, respectively. Here, the network data fee charging information is information relating to charging a fee according to the network data usage amount. The data fee charging information is information relating to charging a fee according to a usage amount when the user of the wireless terminal 340 uses data held in an application server 330 to be described later. Note that the usage amount of data held in the application server 330 is referred to as "data usage amount." Also note that the PCRF 220 is an example of a fee charging information holding unit in the Claims.

The first fee charging device 260 charges a fee on the basis of the network data usage amount measured by the P-GW 230 and the data usage amount measured by the second fee charging device 350 to be described later. Note that the first fee charging device 260 is an example of a fee charging unit in the Claims.

The billing domain 270 bills a user who uses the wireless terminal 340 for a fee on the basis of a fee charging result from the first fee charging device 260.

Details of measuring and charging the usage amount of data in the core network 200 are described later.

### [Configuration of wireless access network]

In FIG. 1, the wireless access network 300 includes a base station #1 (310), a base station #2 (320), the second fee charging device 350 and the application server 330.

The base station #1 (310) and the MME 240 are connected to each other via an S1-MME interface. In addition, the base station #1 (310) and the S-GW 250 are connected to each other via an S1-U interface. Note that the base station #2 (320) is also connected in a similar way via these interfaces (not shown). Further, the base station #1 (310) and the base station #2 (320) are connected to each other via an X2 interface.

The base stations #1 (310) and #2 (320) connect the wireless terminal 340 to the wireless access network 300. As illustrated in FIG. 1, the wireless terminal 340 is connected to either the base station #1 (310) or #2 (320) via a Uu interface. Note that while two base stations are provided in FIG. 1, the present technology is not limited thereto and one base station or three or more base stations may be provided.

The application server 330 holds an application and data relating to the application. The application and the data relating to the application are normally held in the server 110. If envisioning an application that broadcasts videos, for example, the data corresponds to a video file and using the data corresponds to an act of downloading the video file. When a user downloads the video file, the video file is transmitted via a pathway 401 represented by the dashed line in FIG. 1. In this case, the time required for downloading increases because transmission is carried out via the P-GW 230 and the S-GW 250.

In order to solve this problem, the video file is held in the application server 330 and the video file is downloaded via a pathway 402 represented by the broken line in FIG. 1. With this configuration, the time required for downloading can be reduced. In this way, the application server 330 holds the data and the held data is used by a user. Note that one application server 330 can be provided for every base station.

The second fee charging device 350 measures the data usage amount on the basis of the data fee charging information output from the above-described PCRF 220. An MCE charging entity (MCE) can be used for the second fee charging device 350. The usage amount of data can be measured using the P-GW 230 in a case where the user uses the data held in the server 110. In the above-described example, the usage amount of data when the video file is downloaded along the pathway 401 can be measured using the P-GW 230. This is because the video file is transmitted via the P-GW 230. However, when the user uses the data held in the application server 330, the P-GW 230 is unable to grasp usage of data and cannot perform measurement.

In order to deal with this, the second fee charging device 350 is disposed between the application server 330 and the base station #1 (310) and measures the usage amount (data usage amount) of the data held in the application server 330. Then, a measurement result is sent to the first fee charging device 260, and it is thereby possible to charge a fee in a case where the data held in the application server 330 is used. Note that the embodiments of the present technology are not limited to the configuration illustrated in FIG. 1 and, for instance, can have a configuration in which the application server 330 is disposed between the S-GW 250 and the base station #1 (310). Even in this case, the second fee charging device 350 can be disposed between the application server 330 and the base station #1 (310). Note that the second fee charging device 350 is an example of an information processing device in the Claims.

### [Configuration of area for charging a fee]

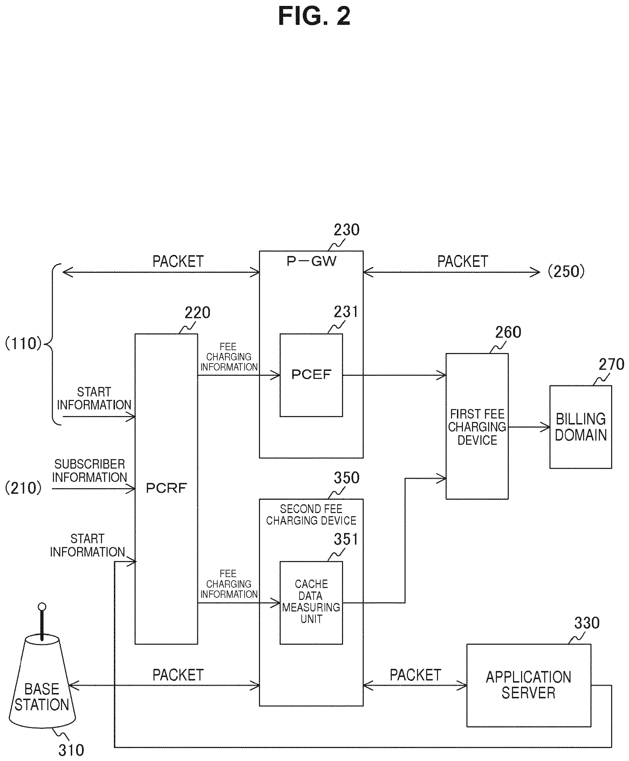

FIG. 2 is an illustration of an exemplary configuration of an area for charging a fee according to the first embodiment of the present technology. FIG. 2 illustrates details of a configuration of a portion in FIG. 1 that is involved with charging a fee.

The P-GW 230 in FIG. 2 includes a policy and charging enforcement function (PCEF) 231. The PCEF 231 measures a network data usage amount on the basis of network data fee charging information supplied by the PCRF 220. The network data usage amount can be measured by, for example, measuring the number of packets transmitted via the P-GW 230.

The second fee charging device 350 in FIG. 2 includes a cache data measuring unit 351. The cache data measuring unit 351 measures a data usage amount on the basis of data fee charging information output by the PCRF 220. The data usage amount can be measured by, for example, measuring the number of packets transmitted via the second fee charging device 350. Note that the cache data measuring unit 351 is an example of a data usage amount measuring unit in the Claims.

The PCRF 220 acquires, as the subscriber information from the HSS 210, information relating to a service permitted by the wireless terminal 340 of a subscriber and fee charging for the wireless terminal 340 of the subscriber. Then, fee charging information is generated on the basis of this information. A fee charging rule can be applied to the fee charging information. For example, specifying a fee charging method or an ID for identifying an application, information relating to a flow of data for which the data usage amount is to be measured, or the like corresponds to the fee charging information.

The fee can be charged as follows in a case where a user uses the data of the server 110. First, start information indicating that data usage is to start is sent from an application of the server 110 to the PCRF 220. The PCRF 220 generates fee charging information (network data fee charging information) on the basis of the start information and the subscriber information output from the HSS 210, and supplies the fee charging information to the PCEF 231 of the P-GW 230. After the fee charging information is supplied to the PCEF 231, the PCEF 231 begins to measure the network data usage amount. Then, a measurement result is sent to the first fee charging device 260 and a fee is charged for the use of data of the server 110.

On the other hand, the fee can be charged as follows in a case where the user uses the data of the application server 330. First, start information indicating that data usage is to start is sent from the application server 330 to the PCRF 220. The PCRF 220 generates fee charging information (data fee charging information) on the basis of the start information and the subscriber information output from the HSS 210, and supplies the fee charging information to the cache data measuring unit 351 of the second fee charging device 350. After the fee charging information is supplied to the cache data measuring unit 351, the cache data measuring unit 351 begins to measure the data usage amount. Then, a measurement result is sent to the first fee charging device 260 and a fee is charged for the use of data of the application server 330.

The measurement of the network data usage amount and the measurement of the data usage amount can be performed simultaneously or separately according to how the data is used. For example, only the network data usage amount is measured in a case where the user of the wireless terminal 340 uses the data of the server 110. Only the data usage amount is measured in a case where the user of the wireless terminal 340 or a business that runs an over-the-top business uploads data to the application server 330. In addition, only the data usage amount is measured even in a case where the user of the wireless terminal 340 sends/receives data relating to an application such as a game to/from the application server 330. Both the network data usage amount and the data usage amount are measured in a case where the user of the wireless terminal 340 uses the data of the server 110 and that data is held in the application server 330.

### [Configuration of first fee charging device]

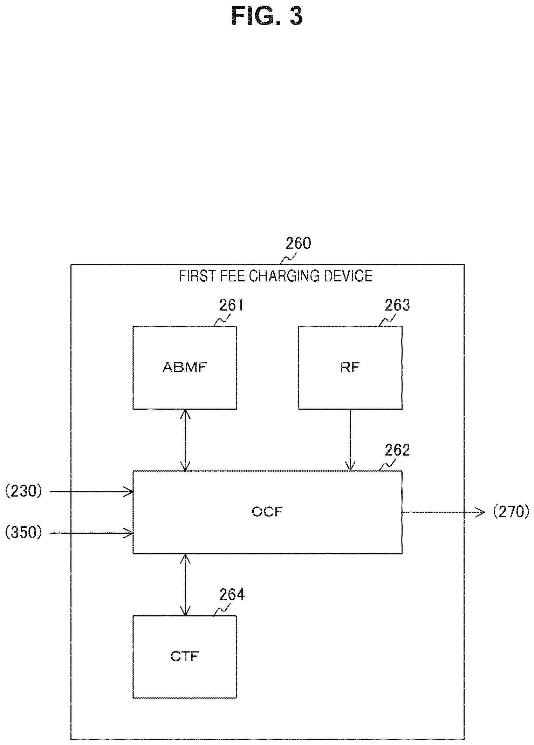

FIG. 3 is an illustration of an exemplary configuration of the first fee charging device 260 according to the first embodiment of the present technology. FIG. 3 illustrates an example of a first fee charging device 260 that performs online fee charging. Herein, "online fee charging" refers to a method of charging a fee in which a fee is charged each time a network is used.

The first fee charging device 260 includes an account balance management function (ABMF) 261, an online fee charging function (OCF) 262, a rating function (RF) 263 and a fee charging trigger function (CTF) 264.

The ABMF 261 manages an account balance of the subscriber. Herein, "account balance" refers to a balance of a network usage amount previously purchased by the subscriber.

The RF 263 determines a rate and outputs the rate to the OCF 262. The rate corresponds to, for example, a usage fee per packet.

The CTF 264 detects occurrence of a paid event. In addition, the CTF 264 further includes a function of stopping the subscriber from using the network in a case where the account balance has run out due to using the network.

The OCF 262 controls the entire first fee charging device 260 and executes the online fee charging. When usage amounts of data are sent from the P-GW 230 and the second fee charging device 350, the OCF 262 authenticates the use of this data. Then, the OCF 262 charges a fee on the basis of the sent usage amounts of data and a fee charging rate output from the RF 263. In addition, the OCF 262 sends a fee charging result to the billing domain 270.

### [Fee charging processing]

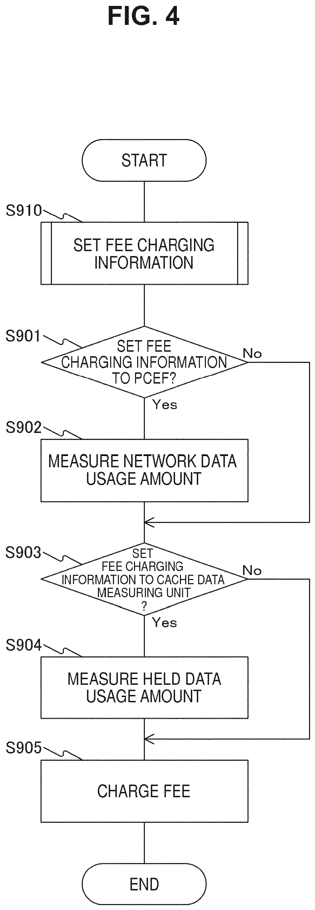

FIG. 4 is an illustration of an exemplary processing procedure for fee charging processing according to the first embodiment of the present technology. The processing in FIG. 4 is executed when start information is output to the PCRF 220 from the server 110 or the application server 330.

First, the PCRF 220 performs processing of setting fee charging information (Step S910). In the processing of setting fee charging information, in a case where fee charging information (network data fee charging information) is set in the PCEF 231 (Step S901: Yes), the PCEF 231 measures the network data usage amount (Step S902) and the processing shifts to Step S903. In a case where fee charging information is not set in the PCEF 231 (Step S901: No), the processing skips Step S902 and shifts to Step S903.

In the processing of setting fee charging information, the cache data measuring unit 351 measures the data usage amount (Step S904) in a case where fee charging information (data fee charging information) is set in the cache data measuring unit 351 (Step S903: Yes). In a case where fee charging information is not set in the cache data measuring unit 351 (Step S903: No), the processing skips Step S904 and shifts to Step S905. In Step S905, the first fee charging device 260 charges a fee on the basis of the network data usage amount measured by the PCEF 231 and the data usage amount measured by the cache data measuring unit 351 (Step S905).

### [Processing of setting fee charging information]

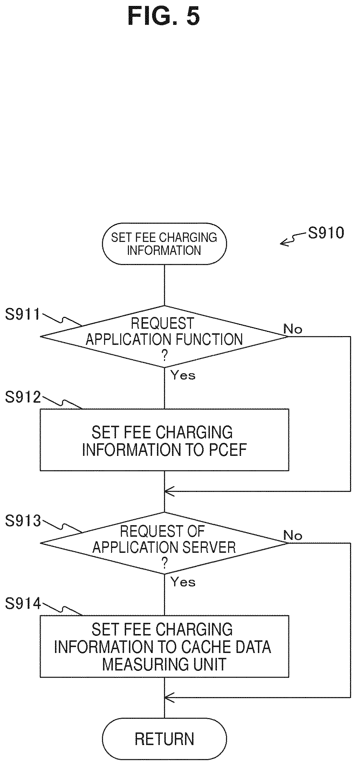

FIG. 5 is an illustration of an exemplary processing procedure for processing of setting fee charging information (Step S910) according to the first embodiment of the present technology. The processing in FIG. 5 is processing that corresponds to the above-described processing of setting fee charging information (Step S910) in FIG. 4. In a case where a request for charging a fee is output from an application function of the server 110, that is, start information is input from the application function (Step S911: Yes), the PCRF 220 sets fee charging information in the PCEF 231 (Step S912). The PCRF 220 can perform this action by supplying network data fee charging information to the PCEF 231. Next, in a case where a request for charging a fee is output from the application server 330, that is, start information is output from the application server 330 (Step S913: Yes), the PCRF 220 sets fee charging information in the cache data measuring unit 351 (Step S914). The PCRF 220 can perform this action by supplying data fee charging information to the cache data measuring unit 351. Thereafter, the PCRF 220 ends the processing for setting fee charging information.

As described above, in the first embodiment of the present technology, the cache data measuring unit 351 measures the usage amount when the user of the wireless terminal 340 uses the data held in the application server 330, and charges a fee on the basis of a result of this measurement. With this configuration, a fee can be correctly charged according to the data usage amount.

### <2. Second embodiment>

In the above-described first embodiment, the cache data measuring unit 351 directly outputs the data usage amount to the first fee charging device 260. In contrast, the second embodiment of the present technology differs from the first embodiment in that a system including a plurality of cache data measuring units 351 is provided with a gateway that compiles a plurality of data usage amounts and outputs the plurality of data usage amounts to the first fee charging device 260.

### [Configuration of area for charging a fee]

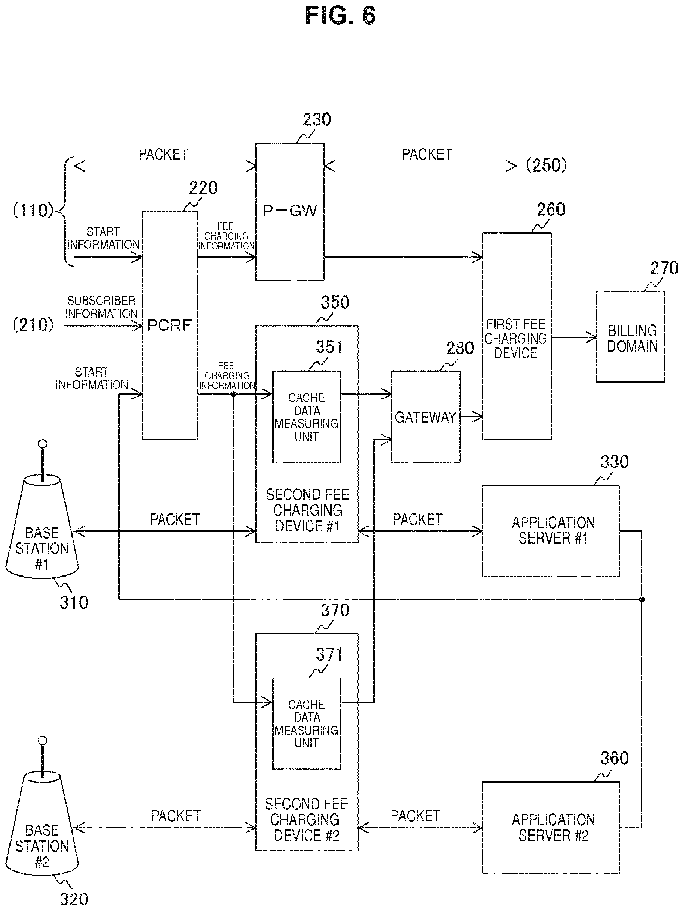

FIG. 6 is an illustration of an exemplary configuration of an area for charging a fee according to the second embodiment of the present technology. The configuration of the area for charging a fee in FIG. 6 differs from the above-described configuration of the area for charging a fee in FIG. 2 in that the area in FIG. 6 further includes a second fee charging device #2 (370), an application server #2 (360) and a gateway 280. The system in FIG. 6 represents an example of a case where one application server and one second fee charging device are provided for each base station.

The cache data measuring unit 351 of the second fee charging device #1 (350) in FIG. 6 measures the usage amount of data held in the application server #1 (330). In addition, a cache data measuring unit 371 of the second fee charging device #2 (370) measures the usage amount of data held in the application server #2 (360).

The gateway 280 holds respective data usage amounts measured by the cache data measuring units 351 and 371. The gateway 280 compiles a plurality of held data usage amounts and sends these amounts to the first fee charging device 260. The first fee charging device 260 performs processing of charging a fee for the complied data usage amounts, which reduces processing load of the first fee charging device 260. With this configuration, processing of the first fee charging device 260 can be simplified compared to a case where data usage amounts are individually output to the first fee charging device 260 from a plurality of cache data measuring units. Note that, while the configuration in FIG. 6 includes one gateway 280, the second embodiment of the present technology is not limited to this configuration. For example, in a case where multiple second fee charging devices are provided, there may be adopted a configuration in which a plurality of gateways is mutually connected in a hierarchy. Note that the gateway 280 is an example of a data usage amount holding unit in the Claims.

Other components of the information processing system 10 are similar to the components of the information processing system 10 described in the first embodiment of the present technology, and hence a description of those components is omitted.

As described above, according to the second embodiment of the present technology, the gateway 280 compiles a plurality of data usage amounts and sends those amounts to the first fee charging device 260. As a result, processing of the first fee charging device 260 can be simplified.

### <3. Third embodiment>

In the above-described first embodiment, the cache data measuring unit 351 directly outputs the data usage amount to the first fee charging device 260. In contrast, a third embodiment of the present technology differs from the first embodiment in that the data usage amount is output to the first fee charging device 260 via the PCEF 232.

### [Configuration of area for charging a fee]

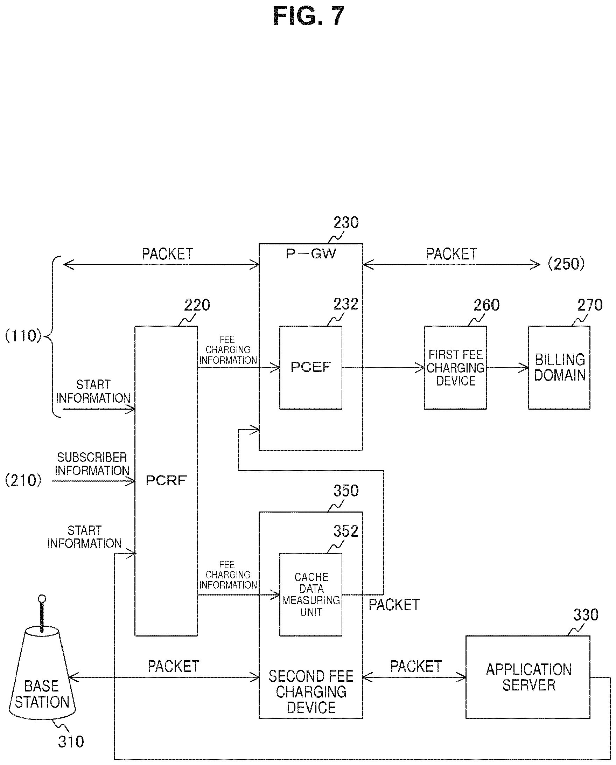

FIG. 7 is an illustration of an exemplary configuration of an area for charging a fee according to the third embodiment of the present technology. The configuration of the area for charging a fee in FIG. 7 differs from the configuration of the above-described area for charging a fee in FIG. 2 in that the data usage amount measured by the second fee charging device 350 is output to the first fee charging device 260 via the P-GW 230.

### [Configuration of P-GW and second fee charging device]

The second fee charging device 350 in FIG. 7 includes a cache data measuring unit 352. The cache data measuring unit 352 generates data usage amount information on the basis of a measured data usage amount and sends that information to the PCEF 232. The cache data measuring unit 352 in FIG. 7 generates a packet according to the data usage amount as the data usage amount information and sends the packet to the PCEF 232. A packet can be generated each time the data held in the application server 330 is used. In addition, a packet can be generated and sent to the P-GW 230 in a case where the data held in the application server 330 is used a predetermined number of times.

The P-GW 230 in FIG. 7 includes the PCEF 232. The PCEF 232 measures a packet sent from the cache data measuring unit 352 as the network data usage amount. In other words, the PCEF 232 measures a number of packets of packets sent by the server 110 and packets sent by the cache data measuring unit 352 as the network data usage amount, and sends this number to the first fee charging device 260. With this configuration, the first fee charging device 260 charges a fee only on the basis of the network usage amount sent from the PCEF 232, and processing of the first fee charging device 260 can be simplified.

Other components of the information processing system 10 are similar to the components of the information processing system 10 described in the first embodiment of the present technology, and hence a description of those components is omitted.

In this way, in the third embodiment of the present technology, the PCEF 232 measures the data usage amount as the network data usage amount on the basis of the data usage amount information generated by the cache data measuring unit 352 and sends this amount to the first fee charging device 260. With this configuration, processing of the first fee charging device 260 can be simplified.

### <4. Fourth embodiment>

In the above-described first embodiment, the second fee charging device is disposed between the base station and the application server. In contrast, the fourth embodiment of the present technology differs from the first embodiment in that the second fee charging device forms a part of the application server and transfers the data fee charging information when handover has occurred due to movement of the wireless terminal.

### [Configuration of wireless access network]

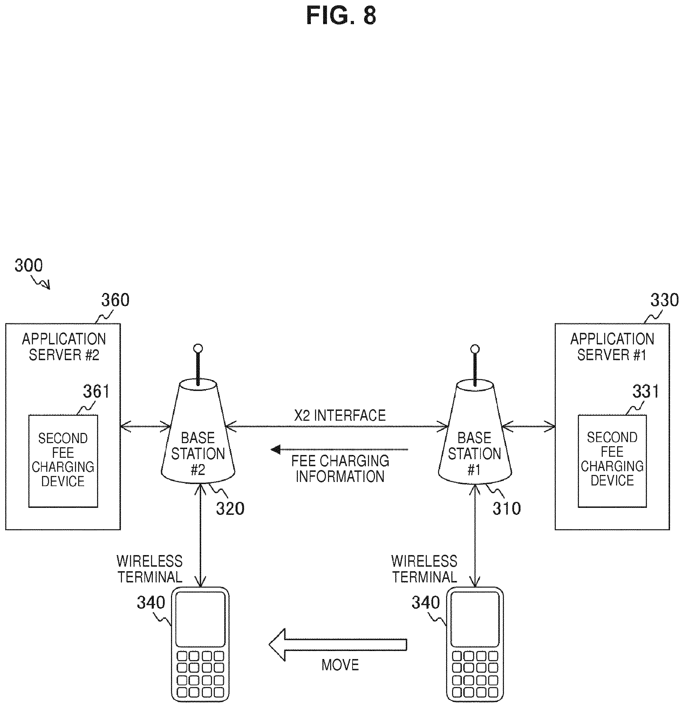

FIG. 8 is an illustration of an exemplary configuration of the wireless access network 300 according to the fourth embodiment of the present technology. FIG. 8 illustrates the configuration of part of the wireless access network 300 in the above-described information processing system 10 in FIG. 1. The wireless access network 300 in FIG. 8 differs from the above-described wireless access network 300 in FIG. 1 in the following ways. The wireless access network 300 in FIG. 8 further includes the application server #2 (360) connected to the base station #2 (320). In addition, the application servers #1 (330) and #2 (360) include a second fee charging device 331 and a second fee charging device 361, respectively. In other words, the second fee charging devices 331 and 361 form a part of the application servers #1 (330) and #2 (360), respectively. Note that the configuration of the second fee charging device 361 is similar to the configuration of the above-described second fee charging device 331 in FIG. 2, and hence a description of the configuration is omitted.

In addition, FIG. 8 further illustrates an example of a case where handover has occurred. Herein, "handover" refers to a function of automatically switching a connected base station in response to movement of the wireless terminal 340 and continuing communication. FIG. 8 illustrates an example of a case where the wireless terminal 340 that is connected to the base station #1 (310) has moved into the cell region of the base station #2 (320). At this time, the wireless terminal 340 after moving is automatically connected to the base station #2 (320) and can continuously communicate data. When handover occurs, in a case where the wireless terminal 340 was using data held in the application server #1 (330), the wireless terminal 340 can continuously use the data by connecting to the application server #2 (360).

At this time, data fee charging information must be set in the cache data measuring unit 351 disposed in the second fee charging device 361 of the application server #2 (360). This information can be set through the PCRF 220 newly supplying data fee charging information to the cache data measuring unit 351 disposed in the second fee charging device 361. However, it takes time to supply new data charging settings using the PCRF 220, and hence there is a possibility that a fee is not charged for usage of the data from the application server #2 (360) by the wireless terminal 340.

To solve this problem, as in the case of handover, when the connected base station is switched as a result of the wireless terminal 340 moving, data fee charging information of the cache data measuring unit 351 that corresponds to the base station that was connected before the switch is sent to the cache data measuring unit 351 that corresponds to the connected base station after the switch. In the example in FIG. 8, the data fee charging information of the cache data measuring unit 351 of the second fee charging device 331 is sent to the cache data measuring unit 351 of the second fee charging device 361. The data can be sent via the shortest pathway by using an X2 interface. With this configuration, data fee charging information can quickly be set in the cache data measuring unit 351 of the second fee charging device 361.

### [Handover processing]

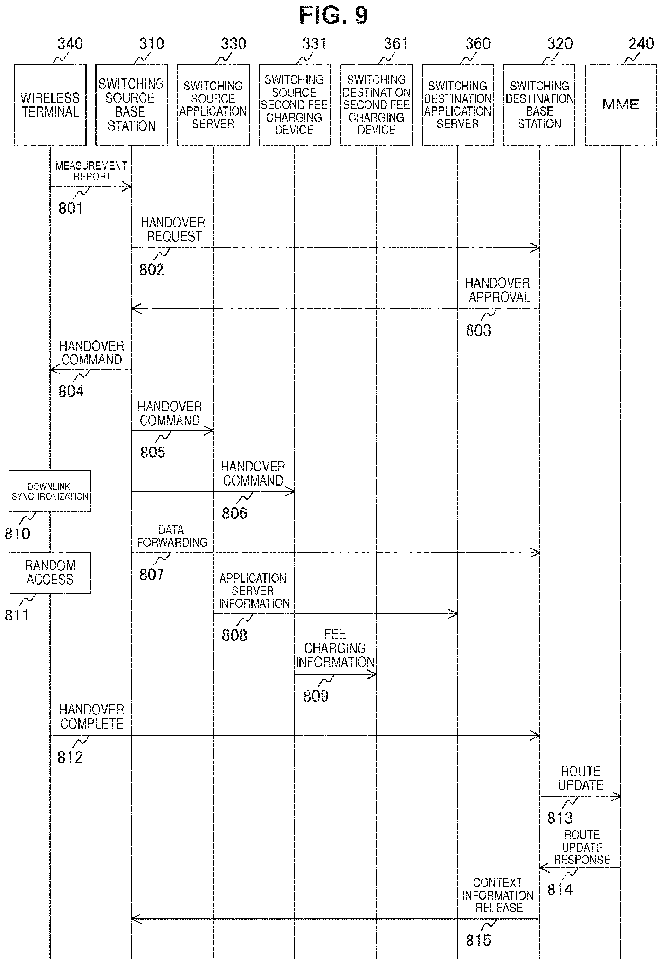

FIG. 9 is an illustration of an exemplary handover sequence according to the fourth embodiment of the present technology. First, the wireless terminal 340 generates a measurement report and sends the measurement report to a switching source base station 310 (801). The switching source base station 310 that has received the measurement report determines whether or not handover should be performed. In a case where the switching source base station 310 determines that handover should be performed, a handover request is sent to a switching destination base station 320 (802). In a case where the switching destination base station 320 that has received the handover request can accept the wireless terminal 340, a handover approval request is sent to the switching source base station 320 (803).

The switching source base station 310 that has received the handover approval request sends a handover command to the wireless terminal 340 (804). The switching source base station 310 also sends a handover command to a switching source application server 330 (805). In addition, the switching source base station 310 sends a handover command to a switching source second fee charging device 331 (806). The wireless terminal 340 that has received the handover command synchronizes with a downlink channel of the switching destination base station 320 (810), and randomly accesses the switching destination base station 320 (811). During this time, the switching source base station 310 transfers data sent to the wireless terminal 340 to the switching destination base station 320 (807).

The switching source application server 330 that has received the handover command sends/receives information to/from the switching destination application server 360. More specifically, the switching source application server 330 sends application server information to the switching destination application server 360 (808). In addition, the switching source second fee charging device 331 sends fee charging information (data fee charging information) to the switching destination second fee charging device 361 (809). This information is sent via a X2 interface.

If handover is successful, the wireless terminal 340 sends a handover completion message to the switching destination base station 320 (812). The switching destination base station 320 that has received the handover completion message requests the MME 240 to update a route (813). The MME 240 updates the route for user data and sends a route update response to the switching destination base station 320 (814). With this configuration, the wireless terminal 340 can communicate via the switching destination base station 320. Then, a context information release message is sent from the switching destination base station 320 to the switching source base station 310 (815).

Other components of the information processing system 10 are similar to the components of the information processing system 10 described in the first embodiment of the present technology, and hence a description of those components is omitted.

In this way, according to the fourth embodiment of the present technology, data fee charging information can be quickly set by transferring the data fee charging information between corresponding application servers at the time of handover.

### <5. Fifth embodiment>

In the above-described first embodiment, data is transmitted to the application server 330 via the P-GW 230 and the S-GW 250. In contrast, a fifth embodiment of the present technology differs from the first embodiment in that the application server 330 is connected to the network 100 via a dedicated P-GW 430 and data is transmitted using the P-GW 430.

### [Configuration of wireless access network]

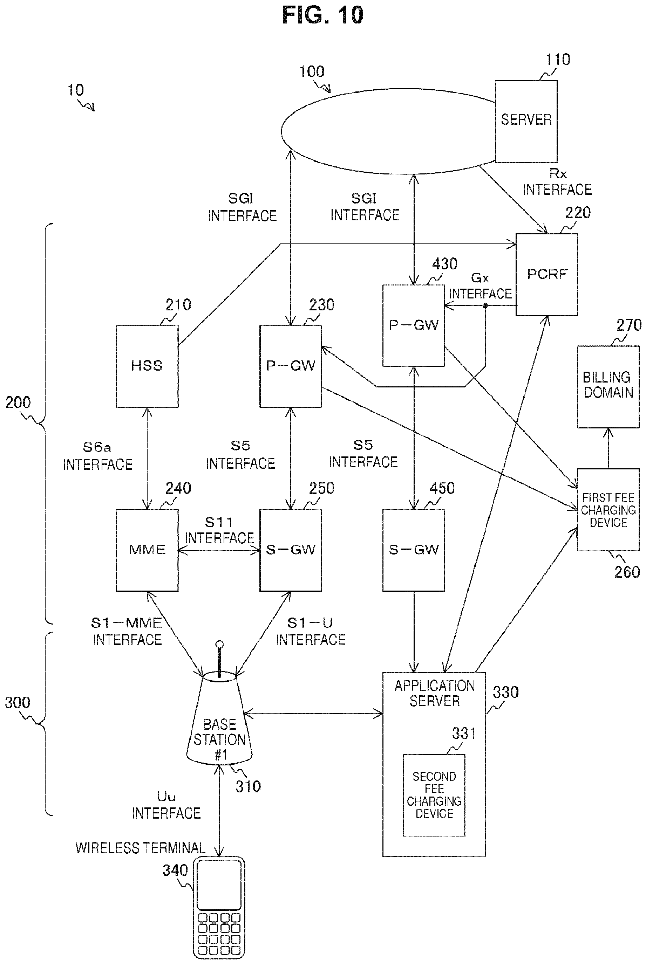

FIG. 10 is an illustration of an exemplary configuration of the information processing system 10 according to the fifth embodiment of the present technology. The information processing system 10 in FIG. 10 differs from the above-described information processing system 10 in FIG. 1 in that the information processing system 10 further includes a P-GW 430 and a S-GW 450. In addition, the second fee charging device 331 is built into the application server 330. The configuration of P-GW 430 and the S-GW 450 is similar to the configuration of the P-GW 230 and the S-GW 250 illustrated in FIG. 2, and hence a description of the configuration is omitted.

The application server 330 in FIG. 10 includes the second fee charging device 331. In addition, data is sent from the server 110 to the application server 330 via the P-GW 430 and the S-GW 450. Because of this, an amount of data held in the application server 330 can be measured using the P-GW 430. In addition, the first fee charging device 260 in FIG. 10 charges a fee on the basis of a usage amount of data measured by the P-GWs 230 and 430 and the second fee charging device 331.

### [Configuration of area for charging a fee]

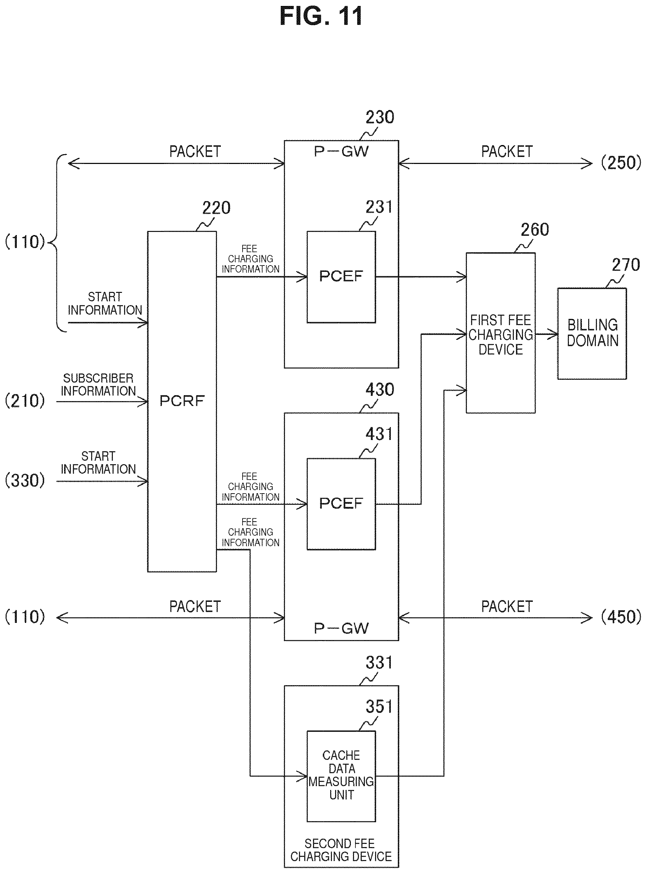

FIG. 11 is an illustration of an exemplary configuration of an area for charging a fee according to the fifth embodiment of the present technology. The configuration of the area for charging a fee in FIG. 11 differs from the above-described configuration of the area for charging a fee in FIG. 2 in that the area in FIG. 11 further includes the P-GW 430.

The PCRF 220 in FIG. 11 supplies fee charging information to the PCEFs 231 and 431 and the cache data measuring unit 351.

The PCEF 431 of the P-GW 430 measures the number of packets transmitted to/from the server 110 and the S-GW 450 on the basis of the fee charging information supplied by the PCRF 220 and sends that number to the first fee charging device 260.

Note that one P-GW is disposed for every application server in a case where a plurality of application servers is used. In this case, the above-described gateway in FIG. 6 can be used to compile measurement results in the plurality of P-GWs and send the results to the first fee charging device 260.

Other components of the information processing system 10 are similar to the components of the information processing system 10 described in the first embodiment of the present technology, and hence a description of those components is omitted.

In this way, according to the fifth embodiment of the present technology, the amount of data held in the application server 330 can be measured by providing a dedicated P-GW 430 for the application server 330 to measure the amount of data.

### <6. Modification example>

In the above-described embodiments, the first fee charging device 260 performs the online fee charging, but the first fee charging device 260 may perform offline fee charging. Even in a case where offline fee charging is performed, the cache data measuring unit 351 is used to measure the usage amount of data held in the application server 330 and a fee is charged on the basis of a result of this measurement.

### [Configuration of first fee charging device]

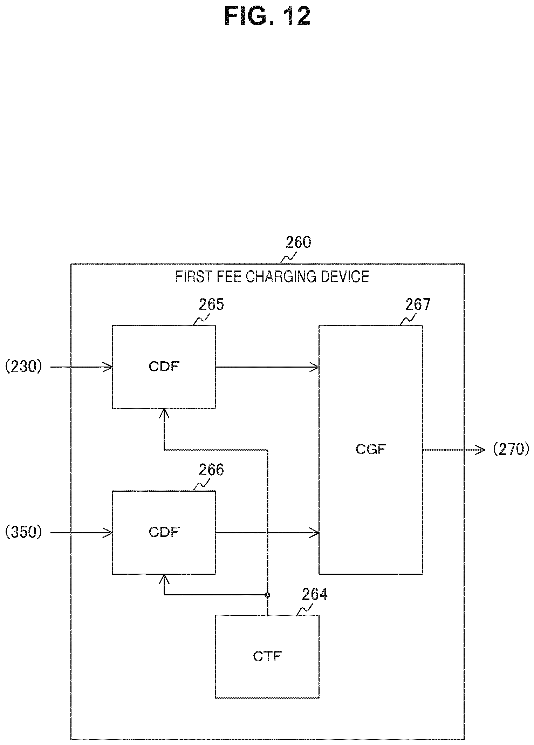

FIG. 12 is an illustration of an exemplary configuration of the first fee charging device 260 according to a modification example of an embodiment of the present technology. FIG. 12 illustrates an example of a first fee charging device 260 that performs offline fee charging. Here, "offline fee charging" refers to a method of charging a fee in which fee charging information for determining a fee to be billed on a closing date such as the end of every month, for example, is accumulated.

The first fee charging device 260 in FIG. 12 includes a CTF 264, charging data functions (CDF) 265 and 266 and a charging gateway function (CGF) 267.

The CDFs 265 and 266 collect a number of packets when a paid event is detected by the CTF 264. The CDF 265 collects the number of packets transmitted by the P-GW 230. The CDF 266 collects the number of packets transmitted by the second fee charging device 350.

The CGF 267 combines the number of packets collected by the CDFs 265 and 266 to generate data for formatted fee charging and outputs the data to the billing domain 270. Note that a charging data record (CDR) can be used as the format of the data for fee charging.

In this way, according to the modification example of the embodiment of the present technology, even in a case where offline fee charging is performed, the usage amount of the data held in the application server 330 can be measured using the cache data measuring unit 351 and the fee can be charged on the basis of this measurement.

As described above, according to the embodiments of the present technology, a fee can be correctly charged through the cache data measuring unit 351 measuring the usage amount of data held in the application server 330, which is a cache server.

The above-described embodiments are examples for embodying the present technology, and matters in the embodiments each have a corresponding relationship with disclosure-specific matters in the claims. Likewise, the matters in the embodiments and the disclosure-specific matters in the claims denoted by the same names have a corresponding relationship with each other.

The processing sequences that are described in the embodiments described above may be handled as a method having a series of sequences or may be handled as a program for causing a computer to execute the series of sequences and recording medium storing the program. As the recording medium, a CD (Compact Disc), an MD (MiniDisc), and a DVD (Digital Versatile Disc), a memory card, and a Blu-ray disc (registered trademark) can be used.

Note that the effects described in the present specification are not necessarily limited, and any effect described in the present disclosure may be exhibited.

### Reference Signs List

- 10: information processing system
- 100: network
- 110: server
- 200: core network
- 210: home subscriber server (HSS)
- 220: policy and charging rule function (PCRF)
- 230, 430: packet data network gateway (P-GW)
- 231, 232, 431: policy and charging enforcement function (PCEF)
- 240: mobility management entity (MME)
- 250, 450: serving gateway (S-GW)
- 260: first fee charging device
- 261: account balance management function (ABMF)
- 262: online charging function (OCF)
- 263: rating function (RF)
- 264: charging trigger function (CTF)
- 265, 266: charging data function (CDF)
- 267: charging gateway function (CGF)
- 270: billing domain
- 280: gateway
- 300: wireless access network
- 310, 320: base station

## Claims

1. An information processing device (350) comprising a cache data measuring unit (351) configured to measure a data usage amount when a wireless terminal (340) uses data relating to an application in an application server (330) that holds the application and the data, wherein the information processing device (350) is disposed between a base station (310) to which the wireless terminal (340) is connected and the application server (330) by a direct connection, and the measurement, by the cache data measuring unit (351), is performed on a basis of data communication between the base station (310) and the application server (330), and wherein the information processing device (350) is configured to send the measured data usage amount to a fee charging unit (260) for charging a fee on a basis of said measurement result.

2. An information processing system (10), comprising:
an application server (330) configured to hold an application and data relating to the application;
an information processing device (350) according to claim 1;
a network data usage amount measuring unit (230) connected to a network (100) and configured to measure a network data usage amount when the wireless terminal (340) uses data on said network (100) via a wireless access network (300) connected to the wireless terminal (340); and
a fee charging unit (260) disposed between the information processing device (350) and the network data usage amount measuring unit (230) and wherein the fee charging unit (260) is configured to charge a fee on a basis of the measured network data usage amount and charge a fee on a basis of the measured data usage amount.

3. The information processing system (10) according to claim 2, further comprising:
a fee charging information holding unit (220) configured to generate data fee charging information that is information relating to charging a fee according to the data usage amount and network data fee charging information that is information relating to charging a fee according to the network data usage amount, and to supply the data fee charging information and the network data fee charging information to the cache data measuring unit (351) and to the network data usage amount measuring unit (230), respectively,
wherein the cache data measuring unit(351) is configured to perform the measurement on a basis of the supplied data fee charging information, and
the network data usage amount measuring unit (230) is configured to perform the measurement on a basis of the supplied network data fee charging information.

4. The information processing system (10) according to any one of claims 2 or 3,
wherein the cache data measuring unit (351) is configured to send data usage amount information according to the data usage amount to the network data usage amount measuring unit (230),
the network data usage amount measuring unit (230) is configured to measure a data usage amount based on the sent data usage amount information as the network data usage amount, and
the fee charging unit (260) is configured to charge a fee on a basis of the measured network data usage amount.

5. The information processing system (10) according to any one of claims 2 or 3, further comprising:
a data usage amount holding unit (280) configured to hold respective data usage amounts measured by a plurality of the cache data measuring units (351),
wherein the fee charging unit (260) is configured to charge a fee on a basis of the network data usage amount, and to charge a fee on a basis of a plurality of data usage amounts held in the data usage amount holding unit (280).

6. The information processing system (10) according to any one of claim 2 to 5, further comprising:
a plurality of base stations (310, 320) provided in the wireless access network (300) and to each of which the wireless terminal (340) is to be connected,
wherein the cache data measuring unit(351) is provided for each base station (310, 320) and configured to perform the measurement on a basis of data fee charging information that is information relating to charging a fee according to the data usage amount, and
when the base station (310, 320) to which the wireless terminal is connected is switched as a result of handover, the data fee charging information of the cache data measuring unit(351) provided for the base station (310, 320) to which the wireless terminal (340) is connected before switchover is sent to the cache data measuring unit(351) provided for the base station (310, 320) to which the wireless terminal (340) is to be connected after the switchover.

7. An information processing method comprising:
a measurement step of measuring a data usage amount by a cache data measuring unit (351) of an information processing device (350) when a wireless terminal (340) uses data relating to an application in an application server (330) that holds the application and the data, wherein the information processing device (350) is disposed between a base station (310) to which the wireless terminal (340) is connected and the application server (330) by a direct connection, and the measurement is performed on a basis of data communication between the base station (310) and the application server (330), and
a transmitting step of sending the measured data usage amount to a fee charging unit (260) for charging a fee on a basis of said measurement result.

8. A program for causing a computer to carry out the steps of the information processing method according to claim 7 when said program is executed by the computer.

## Patentansprüche

1. Informationsverarbeitungsvorrichtung (350), umfassend eine Cachedaten-Messeinheit (351), die dazu ausgelegt ist, eine Datennutzungsmenge zu messen, wenn ein drahtloses Endgerät (340) Daten verwendet, die sich auf eine Anwendung in einem Anwendungsserver (330) beziehen, der die Anwendung und die Daten hält, wobei die Informationsverarbeitungsvorrichtung (350) zwischen einer Basisstation (310), mit der das drahtlose Endgerät (340) verbunden ist, und dem Anwendungsserver (330) durch eine direkte Verbindung angeordnet ist, und die Messung durch die Cachedaten-Messeinheit (351) basierend auf einer Datenkommunikation zwischen der Basisstation (310) und dem Applikationsserver (330) durchgeführt wird, und wobei die Informationsverarbeitungsvorrichtung (350) dazu ausgelegt ist, die gemessene Datennutzungsmenge an eine Gebührenerhebungseinheit (260) zum Erheben einer Gebühr auf Basis des Messergebnisses zu senden.

2. Informationsverarbeitungssystem (10), umfassend:
einen Anwendungsserver (330), der dazu ausgelegt ist, eine Anwendung und Daten in Bezug auf die Anwendung zu halten;
eine Informationsverarbeitungsvorrichtung (350) nach Anspruch 1;
eine Netzwerkdaten-Nutzungsmengen-Messeinheit (230), die mit einem Netzwerk (100) verbunden ist und dazu ausgelegt ist, eine Netzwerkdaten-Nutzungsmenge zu messen, wenn das drahtlose Endgerät (340) Daten in dem Netzwerk (100) über ein drahtloses Zugangsnetzwerk (300) nutzt, das mit dem drahtlosen Endgerät (340) verbunden ist; und
eine Gebührenerhebungseinheit (260), die zwischen der Informationsverarbeitungsvorrichtung (350) und der Netzwerkdatennutzungsmengen-Messeinheit (230) angeordnet ist, und wobei die Gebührenerhebungseinheit (260) dazu ausgelegt ist, eine Gebühr auf der Basis der gemessenen Netzwerkdaten-Nutzungsmenge zu erheben und eine Gebühr auf der Basis der gemessenen Datennutzungsmenge zu erheben.

3. Informationsverarbeitungssystem (10) nach Anspruch 2, ferner umfassend:
eine Gebührenerhebungsinformations-Halteeinheit (220), die dazu ausgelegt ist, Datengebührenerhebungsinformationen, die sich auf die Erhebung einer Gebühr gemäß der Datennutzungsmenge beziehen, und Netzdatengebührenerhebungsinformationen, die sich auf die Erhebung einer Gebühr gemäß der Netzdaten-Nutzungsmenge beziehen, zu erzeugen und die Datengebührenerhebungsinformationen und die Netzdatengebührenerhebungsinformationen an die Cachedaten-Messeinheit (351) bzw. an die Netzdaten-Nutzungsmengen-Messeinheit (230) zu liefern,
wobei die Cachedaten-Messeinheit (351) dazu ausgelegt ist, die Messung auf der Basis der gelieferten Datengebühren-Erhebungsinformationen durchzuführen, und die Netzwerkdatennutzungsmengen-Messeinheit (230) dazu ausgelegt ist, die Messung auf der Basis der gelieferten Netzwerkdaten-Gebührenerhebungsinformationen durchzuführen.

4. Informationsverarbeitungssystem (10) nach einem der Ansprüche 2 oder 3,
wobei die Cache-Datenmesseinheit (351) dazu ausgelegt ist, Datennutzungsmengeninformationen gemäß der Datennutzungsmenge an die Netzdaten-Nutzungsmengenmesseinheit (230) zu senden,
die Netzwerkdaten-Nutzungsmengen-Messeinheit (230) dazu ausgelegt ist, eine Daten-Nutzungsmenge basierend auf den gesendeten Daten-Nutzungsmengen-Informationen als die Netzwerkdaten-Nutzungsmenge zu messen, und
die Gebührenerhebungseinheit (260) dazu ausgelegt ist, eine Gebühr auf der Basis der gemessenen Netzwerkdaten-Nutzungsmenge zu erheben.

5. Informationsverarbeitungssystem (10) nach einem der Ansprüche 2 oder 3, ferner umfassend:
eine Datennutzungsmengen-Halteeinheit (280), die dazu ausgelegt ist, die jeweiligen Datennutzungsmengen zu halten, die von mehreren der Cachedaten-Messeinheiten (351) gemessen werden,
wobei die Gebührenerhebungseinheit (260) dazu ausgelegt ist, eine Gebühr auf der Basis der Netzwerk-Datennutzungsmenge zu erheben und eine Gebühr auf der Basis mehrerer in der Datennutzungsmengen-Halteeinheit (280) gehaltener Datennutzungsmengen zu erheben.

6. Informationsverarbeitungssystem (10) nach einem der Ansprüche 2 bis 5, ferner umfassend:
mehrere Basisstationen (310, 320), die in dem drahtlosen Zugangsnetzwerk (300) vorgesehen sind und mit denen jeweils das drahtlose Endgerät (340) zu verbinden ist,
wobei die Cachedaten-Messeinheit (351) für jede Basisstation (310, 320) vorgesehen und dazu ausgelegt ist, die Messung auf der Basis von Datengebührenerhebungsinformationen durchzuführen, die Informationen in Bezug auf das Erheben einer Gebühr gemäß der Datennutzungsmenge sind, und
wenn die Basisstation (310, 320), mit der das drahtlose Endgerät verbunden ist, infolge eines Handover umgeschaltet wird, die Datengebühren-Erhebungsinformation der Cachedaten-Messeinheit (351), die für die Basisstation (310, 320) vorgesehen ist, mit der das drahtlose Endgerät (340) vor dem Umschalten verbunden ist, an die Cachedaten-Messeinheit (351) gesendet wird, die für die Basisstation (310, 320) vorgesehen ist, mit der das drahtlose Endgerät (340) nach dem Umschalten zu verbinden ist.

7. Informationsverarbeitungsverfahren, umfassend:
einen Messschritt des Messens einer Datennutzungsmenge durch eine Cachedaten-Messeinheit (351) einer Informationsverarbeitungsvorrichtung (350), wenn ein drahtloses Endgerät (340) Daten verwendet, die sich auf eine Anwendung in einem Anwendungsserver (330) beziehen, der die Anwendung und die Daten hält, wobei die Informationsverarbeitungsvorrichtung (350) zwischen einer Basisstation (310), mit der das drahtlose Endgerät (340) verbunden ist, und dem Anwendungsserver (330) durch eine direkte Verbindung angeordnet ist, und die Messung auf der Basis einer Datenkommunikation zwischen der Basisstation (310) und dem Anwendungsserver (330) durchgeführt wird, und
einen Übertragungsschritt des Sendens der gemessenen Datennutzungsmenge an eine Gebührenerhebungseinheit (260) zum Erheben einer Gebühr auf der Basis des Messergebnisses.

8. Programm, um einen Computer zu veranlassen, die Schritte des Informationsverarbeitungsverfahrens nach Anspruch 7 durchzuführen, wenn das Programm von dem Computer ausgeführt wird.

## Revendications

1. Dispositif de traitement d'informations (350) comprenant une unité de mesure de données mises en cache (351) configurée pour mesurer une quantité d'utilisation de données quand un terminal sans fil (340) utilise des données relatives à une application dans un serveur d'application (330) qui détient l'application et les données, le dispositif de traitement d'informations (350) étant disposé entre une station de base (310) à laquelle le terminal sans fil (340) est connecté et le serveur d'application (330) par une connexion directe, et la mesure, par l'unité de mesure de données mises en cache (351), est réalisée sur la base d'une transmission de données entre la station de base (310) et le serveur d'application (330), et le dispositif de traitement d'informations (350) étant configuré pour envoyer la quantité d'utilisation de données mesurées à une unité de facturation d'honoraires (260) destinée à facturer des honoraires en fonction dudit résultat de mesure.

2. Système de traitement d'informations (10), comprenant :
un serveur d'application (330) configuré pour détenir une application et des données relatives à l'application ;
un dispositif de traitement d'informations (350) selon la revendication 1 ;
une unité de mesure de quantité d'utilisation de données de réseau (230) connectée à un réseau (100) et configurée pour mesurer une quantité d'utilisation de données de réseau quand le terminal sans fil (340) utilise des données sur ledit réseau (100) par l'intermédiaire d'un réseau d'accès sans fil (300) connecté au terminal sans fil (340) ; et
une unité de facturation d'honoraires (260) disposée entre le dispositif de traitement d'informations (350) et l'unité de mesure de quantité d'utilisation de données de réseau (230), l'unité de facturation d'honoraires (260) étant configurée pour facturer des honoraires en fonction de la quantité d'utilisation de données de réseau mesurée et facturer des honoraires en fonction de la quantité d'utilisation de données mesurée.

3. Système de traitement d'informations (10) selon la revendication 2, comprenant en outre :
une unité de détention d'informations de facturation d'honoraires (220) configurée pour générer des informations de facturation d'honoraires de données qui sont des informations relatives à la facturation d'honoraires en fonction de la quantité d'utilisation de données et des informations de facturation d'honoraires de données de réseau qui sont des informations relatives à la facturation d'honoraires en fonction de la quantité d'utilisation de données de réseau, et fournir les informations de facturation d'honoraires de données et les informations de facturation d'honoraires de données de réseau à l'unité de mesure de données mises en cache (351) et à l'unité de mesure de quantité d'utilisation de données de réseau (230), respectivement,
dans lequel l'unité de mesure de données mises en cache (351) est configurée pour réaliser la mesure en fonction des informations de facturation d'honoraires de données fournies, et
l'unité de mesure de quantité d'utilisation de données de réseau (230) est configurée pour réaliser la mesure en fonction des informations de facturation d'honoraires de données de réseau fournies.

4. Système de traitement d'informations (10) selon l'une quelconque des revendications 2 ou 3,
dans lequel l'unité de mesure de données mises en cache (351) est configurée pour envoyer des informations de quantité d'utilisation de données en fonction de la quantité d'utilisation de données à l'unité de mesure de quantité d'utilisation de données de réseau (230),
l'unité de mesure de quantité d'utilisation de données de réseau (230) est configurée pour mesurer une quantité d'utilisation de données en fonction des informations de quantité d'utilisation de données envoyées en tant que quantité d'utilisation de données de réseau, et
l'unité de facturation d'honoraires (260) est configurée pour facturer des honoraires en fonction de la quantité d'utilisation de données de réseau mesurée.

5. Système de traitement d'informations (10) selon l'une quelconque des revendications 2 ou 3, comprenant en outre :
une unité de détention de quantités d'utilisation de données (280) configurée pour renfermer des quantités d'utilisation de données respectives mesurées par une pluralité des unités de mesure de données mises en cache (351),
dans lequel l'unité de facturation d'honoraires (260) est configurée pour facturer des honoraires en fonction de la quantité d'utilisation de données de réseau, et facturer des honoraires en fonction d'une pluralité de quantités d'utilisation de données détenues dans l'unité de détention de quantités d'utilisation de données (280).

6. Système de traitement d'informations (10) selon l'une quelconque des revendications 2 à 5, comprenant en outre :
une pluralité de stations de base (310, 320) fournies dans le réseau d'accès sans fil (300) et à chacune desquelles le terminal sans fil (340) doit être connecté,
dans lequel l'unité de mesure de données mises en cache (351) est fournie pour chaque station de base (310, 320) et configurée pour réaliser la mesure en fonction d'informations de facturation d'honoraires de données qui sont des informations relatives à la facturation d'honoraires en fonction de la quantité d'utilisation de données, et
quand la station de base (310, 320) à laquelle le terminal sans fil est connecté est commutée à la suite d'un transfert, les informations de facturation d'honoraires de données de unité de mesure de données mises en cache (351) fournies pour la station de base (310, 320) à laquelle le terminal sans fil (340) est connecté avant le transfert sont envoyées à l'unité de mesure de données mises en cache (351) fournie pour la station de base (310, 320) à laquelle le terminal sans fil (340) doit être connecté après le transfert.

7. Procédé de traitement d'informations comprenant :
une étape de mesure consistant à mesurer une quantité d'utilisation de données par une unité de mesure de données mises en cache (351) d'un dispositif de traitement d'informations (350) quand un terminal sans fil (340) utilise des données relatives à une application dans un serveur d'application (330) qui détient l'application et les données, le dispositif de traitement d'informations (350) étant disposé entre une station de base (310) à laquelle le terminal sans fil (340) est connecté et le serveur d'application (330) par une connexion directe, et la mesure est réalisée sur la base d'une transmission de données entre la station de base (310) et le serveur d'application (330), et
une étape de transmission consistant à envoyer la quantité d'utilisation de données mesurée à une unité de facturation d'honoraires (260) afin de facturer des honoraires en fonction dudit résultat de mesure.

8. Programme amenant un ordinateur à réaliser les étapes du procédé de traitement d'information selon la revendication 7 quand ledit programme est exécuté par l'ordinateur.
